# EUROPEAN PATENT APPLICATION

(11) **EP 4 703 711 A1**
(43) Date of publication of application: **04.03.2026**
(21) Application number: 25188054.8
(22) Date of filing: 08.07.2025
(51) Int. Cl.: G01N 21/952, G01N 21/954

(54) **APPARATUS FOR INSPECTING APPEARANCE OF BATTERY PRISMATIC CAN**

(30) Priority: 02.09.2024 KR 20240118760
(71) Applicant: Enscape Co., Ltd., Yongin-si, Gyeonggi-do 17088 (KR)
(72) Inventor: Lee, Yeon Ho, 13433 Seongnam-si (KR); Eo, Uk Seon, 16688 Suwon-si (KR); Kim, Seong Gi, 31461 Asan-si (KR); Ryu, Ji Man, 16494 Suwon-si (KR); Ka, In Ho, 13308 Seongnam-si (KR); Min, Sang Sik, 18297 Hwaseong-si (KR); Kim, Nam Dong, 16385 Suwon-si (KR); Kim, Sang Baek, 13643 Seongnam-si (KR); Jung, Dong Hyun, 18483 Hwaseong-si (KR); Choi, Sang Jin, 13517 Seongnam-si (KR)
(74) Representative: Habermann, Hruschka & Schnabel

(57) **Abstract**

Disclosed is an apparatus for inspecting a prismatic can having a long side and a short side includes: a pair of large surface inspectors spaced apart by first spacing so that the can can enter a first inspecting position with its small surface having the short side first, and configured to capture images from opposing directions; and a pair of small surface inspectors spaced apart by second spacing so that the can can enter a second inspecting position with its large surface having the long side first, and configured to capture images from opposing directions. The apparatus for inspecting the appearance of a battery prismatic can according to the disclosure has an improved accuracy in detecting a defect on the edges as well as on multiple outer surfaces.

## Description

### BACKGROUND OF THE INVENTION

### Field of the Invention

The disclosure relates to an apparatus for inspecting the appearance of a battery prismatic can, and more specifically to an inspection apparatus for detecting external defects of a prismatic can.

This application is the result of the small and medium-sized enterprises (SMEs) technology innovation development program (Development of AI Vision Inspection System for Prismatic battery CAN·CAP components, Project No.: 00277033), which was funded by Ministry of SMEs and Startups, and carried out under the supervision of the Korea Technology and Information Promotion Agency for SMEs.

### Description of the Related Art

In the process of producing secondary batteries, various inspection methods are used to identify whether a can enclosing the battery is normal or defective. Among such inspection methods, there is a method of using a vision inspection device that captures an image of an object to identify whether there are any external defects. Because even a minor defect in the can of the secondary battery may lead to a major defect in the final product, the defect in the can should be inspected more precisely and accurately.

Regarding the inspection device for the secondary battery cans, Korean Patent No. 1,287,464 has been disclosed. However, it is difficult for this related art to detect defects because the corners of the can for the secondary batteries are formed with three-dimensional curved surfaces. Further, it is also difficult for this related art to obtain images of the inside and outside of the can, thereby making it difficult to detect defects.

### Documents of Related Art

(Patent Document 1) Korean Patent No. 1,287,464

### SUMMARY OF THE INVENTION

The disclosure is conceived to solve the conventional problems of difficulty in detecting defects in the appearance of a battery prismatic can, and an aspect of the disclosure is to provide an apparatus for inspecting the appearance.

Further, another aspect of the disclosure is to provide an apparatus improved in the efficiency and accuracy of inspecting the appearance of a prismatic can for secondary batteries.

According to an embodiment of the disclosure, there is provided an apparatus for inspecting a prismatic can having a long side and a short side includes: a pair of large surface inspectors spaced apart by first spacing so that the can can enter a first inspecting position with its small surface having the short side first, and configured to capture images from opposing directions; and a pair of small surface inspectors spaced apart by second spacing so that the can can enter a second inspecting position with its large surface having the long side first, and configured to capture images from opposing directions.

Meanwhile, each large surface inspector may include: a first camera module configured to capture the image of the large surface; a first coaxial lighting section configured to irradiate light coaxially with the first camera module; and a first ambient lighting section configured to irradiate light at an angle of less than 45 degrees to the large surface.

Further, the first ambient lighting section may include at least one first ambient lighting unit that emits surface light along a surface perpendicular to the large surface.

Meanwhile, the first ambient lighting section may include at least the four first ambient lighting units provided in four directions along edges of the large surface.

Further, the first ambient lighting unit may be provided outside a region to which light is irradiated by the first coaxial lighting section.

Meanwhile, the apparatus may further include a case that is configured to include: one side on which a cross-sectional area is configured as a first area, and a hole is formed at a center portion to allow for image capturing of the camera module, and other side on which a cross-sectional area is configured as a second area larger than the first area, and the ambient lighting unit is provided on an inner side of side walls.

Meanwhile, the first spacing may be larger than the length of the short side.

Meanwhile, the second spacing may be larger than the length of the long side.

Further, the apparatus may further include a bottom surface inspector provided below the large surface inspector, and configured to acquire an image of a bottom surface of the can.

In addition, each small surface inspector may include: a second camera module configured to capture an image of the small surface; a second coaxial lighting section configured to irradiate light coaxially with the second camera module; and a second ambient lighting section configured to irradiate light at an angle of less than 45 degrees to the small surface.

Further, the apparatus may further include a transport unit that has one side inserted into the prismatic can and configured to pick up the prismatic can, and is configured to horizontally move the prismatic can while picking up the prismatic can.

Meanwhile, the transport unit may be configured to allow the can to pass between the pair of large surface inspectors.

Meanwhile, the transport unit may be configured to allow a hand to be adjusted in angle so that the large surface or the small surface can selectively face forward.

In addition, the transport unit may be set to have different entry directions for inspection between the large surface and the small surface while picking up the can.

Meanwhile, when one of the large surface inspectors may operate to irradiate light to the can, the other one may operate to acquire a silhouette image.

Meanwhile, the apparatus may further include: a seating unit configured to transport the prismatic can to an inside inspecting position; and an inside inspector configured to inspect the inside of the prismatic can placed at the inside inspecting position.

The inside inspector may include: a large surface imaging module configured to capture an image of an inner large surface of the prismatic can seated on the inside inspecting position; and a small surface imaging module configured to capture an image of an inner small surface of the prismatic can seated on the inside inspecting position.

Each of the large surface imaging module and the small surface imaging module may include a mirror adjustable in angle and position.

The large surface imaging module may include a first camera, a first inside coaxial lighting section, a first mirror, and a first mirror adjuster. The small surface imaging module may include a second camera, a second inside coaxial lighting section, a second mirror, and a second mirror adjuster. The first mirror adjuster may be configured to adjust at least one of the position and angle of the first mirror. The second mirror adjuster may be configured to adjust at least one of the position and angle of the second mirror.

The first mirrors and the first mirror adjusters may be each provided as a pair to capture images of a pair of the large surfaces.

The small surface imaging module may be configured to acquire images viewed at different angles according to heights of the small surface by adjusting at least one of the angle and position of the mirror.

Meanwhile, the small surface imaging modules may be provided as a pair.

The first mirrors provided as a pair may be each provided outside a pair of the inner large surfaces, and each provided to be inclined at a predetermined angle toward an upper side.

A mounting frame may be further provided to mount the large surface imaging module and the small surface imaging module above a predetermined height. In this case, the inside inspecting position may be defined in a space defined by the mounting frame.

The first camera may be configured to adjust a focus based on adjustment of at least one of the angle and position of the first mirror.

The second camera may be configured to adjust a focus based on adjustment of at least one of the angle and position of the second mirror.

The first inside coaxial lighting section may include a plurality of first lighting units, and the second inside coaxial lighting section may include a plurality of second lighting units. The first lighting unit and the second lighting units may be configured to be controlled individually.

### BRIEF DESCRIPTION OF THE DRAWINGS

FIG. 1 is a view showing a prismatic can to be subjected to inspection according to the disclosure.
FIG. 2 is a perspective view of an apparatus for inspecting the appearance of a battery prismatic can according to a first embodiment of the disclosure.
FIG. 3 is a perspective view of a large surface inspector, in the first embodiment of the disclosure.
FIG. 4 is an exploded perspective view of the large surface inspector, in the first embodiment of the disclosure.
FIG. 5 is an operational state view of the large surface inspector, in the first embodiment of the disclosure.
FIG. 6 is a conceptual view showing an optical path at a first inspecting position, in the first embodiment of the disclosure.
FIG. 7 is an enlarged view of 'I' in FIG. 6.
FIG. 8 is a conceptual view showing an optical path at a second inspecting position, in the first embodiment of the disclosure.
FIG. 9 is a conceptual view showing regions to be inspected by the inspectors based on a bottom view of a prismatic can, in the first embodiment of the disclosure.
FIG. 10 is a conceptual view showing a silhouette image of the can captured in the first embodiment of the disclosure.
FIG. 11 is a usage state view showing the transport of a prismatic can according to an inspection progress in the first embodiment of the disclosure.
FIG. 12 is a usage state view showing the transport of a prismatic can according to an inspection progress in an alternative embodiment to the first embodiment of the disclosure.
FIG. 13 is a block diagram of an apparatus for inspecting the appearance of a battery prismatic can according to a second embodiment of the disclosure.
FIG. 14 is a perspective view of the apparatus for inspecting the appearance of a battery prismatic can according to the second embodiment of the disclosure.
FIG. 15 is a perspective view of an inside inspector in the second embodiment of the disclosure.
FIG. 16 is an exploded perspective view of the inside inspector in the second embodiment of the disclosure.
FIG. 17 is a perspective view of a first mirror and a first mirror adjuster in the second embodiment of the disclosure.
FIG. 18 is an exploded perspective view of the first mirror adjuster in the second embodiment of the disclosure.
FIG. 19 is an operational state view showing an angle adjustment operation of the first mirror adjuster in the second embodiment of the disclosure.
FIG. 20 is a view showing an operation of a large surface imaging module in the second embodiment of the disclosure.
FIG. 21 is a view showing an operation of a small surface imaging module in the second embodiment of the disclosure.
FIG. 22a is a view showing a capturing region based on the operation of the large surface imaging module in the second embodiment of the disclosure.
FIG. 22b is a view showing a capturing region based on the operation of the small surface imaging module in the second embodiment of the disclosure.
FIGS. 23a and 23b are images captured based on the operation of the large surface imaging module in the second embodiment of the disclosure.
FIGS. 24a and 24b are images captured based on the operation of the small surface imaging module in the second embodiment of the disclosure.

### DETAILED DESCRIPTION OF THE INVENTION

Below, an apparatus for inspecting the appearance of a battery prismatic can according to an embodiment of the disclosure will be described in detail with reference to the accompanying drawings. In the following description, the names of components may be referred to as other names in this art. However, these components may be considered as equivalent components in alternative embodiments if they are functionally similar or identical to each other. Further, the reference numerals of the components are merely given for the convenience of description. However, the components indicated by the reference numerals in the accompanying drawings are not limited by those shown therein. Likewise, if components are functionally similar or identical to each other even though they are partially modified in the drawings according to alternative embodiments, the components may be considered as the equivalent components. Further, if components are recognized as components that should be included at the level of those skilled in the art, descriptions thereof will be omitted.

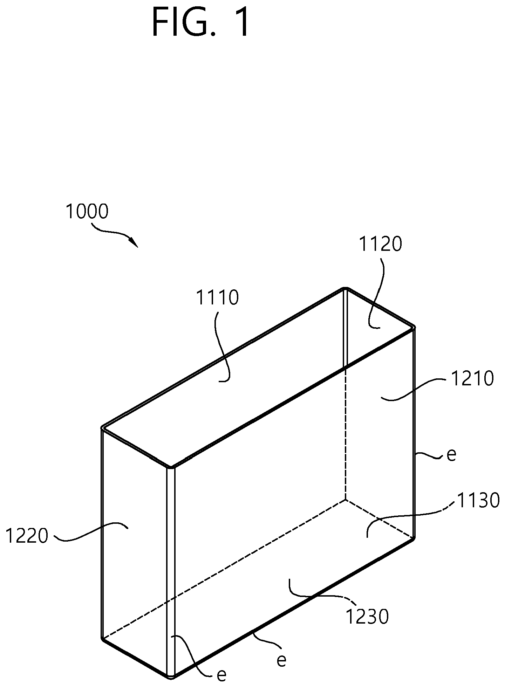

FIG. 1 is a view showing a prismatic can to be subjected to inspection according to the disclosure.

Referring to FIG. 1, a prismatic can 1000 to be inspected according to the disclosure may be applied upon manufacturing batteries such as secondary batteries. The prismatic can 1000 is defined as having five outer surfaces. Four of them are side surfaces, including two surfaces having a wide width and two surfaces having a narrow width. The remaining one is defined as a bottom surface 1130 or 1230. The prismatic can 1000 has a one side opened for inspection.

Hereinafter, the lateral surfaces having a wider width (long side) will be referred to as 'large surfaces 1110 and 1210', and the lateral surfaces having a narrow width (short side) will be referred to as 'small surfaces 1120 and 1220'. In addition, the width of the large surfaces 1110 and 1210 will be referred to as a first width, and the width of the small surfaces 1120 and 1220 will be referred to as a second width.

The large surfaces 1110 and 1210 are further divided into an outer large surface 1210 exposed to the outside and an inner large surface 1110 positioned on the opposite side to the outer large surface 1210 and facing inward. Likewise, the small surfaces 1120 and 1220 are divided into an outer small surface 1220 exposed to the outside and an inner small surface 1120 positioned on the opposite side to the outer small surface 1220 and facing inward.

According to the disclosure, the prismatic can 1000 for the secondary batteries has the large surfaces 1110 and 1210, the small surfaces 1120 and 1220, and the bottom surfaces 1130 and 1230, which are formed as flat surfaces and connected to each other perpendicularly. In this case, an edge e is formed as a curved surface at the connecting portion. Further, the bottom surfaces 1130 and 1230 are divided into an outer bottom surface 1230 exposed to the outside and an inner bottom surface 1130 positioned on the opposite side to the outer bottom surface 1230 and facing inward.

The apparatus for inspecting the appearance of a battery prismatic can according to the first embodiment of the disclosure is configured to accurately detect defects by performing a vision inspection on the outer surfaces and the edges e. Therefore, the 'large surface,' 'small surface,' and 'bottom surface' to be inspected by the apparatus for inspecting the appearance of a battery prismatic can according to the first embodiment set forth herein may refer to the outer large surface 1210, the outer small surface 1220, and the outer bottom surface 1230, respectively.

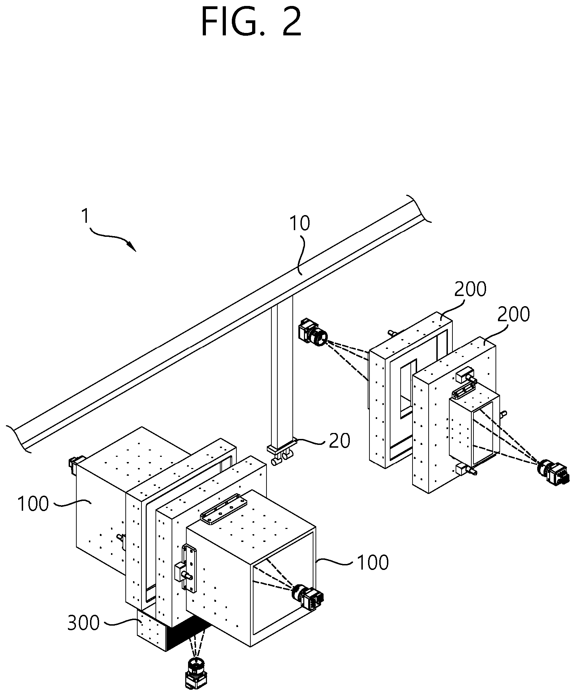

FIG. 2 is a perspective view of an apparatus for inspecting the appearance of a battery prismatic can according to a first embodiment of the disclosure.

Referring to FIG. 2, the apparatus 1 for inspecting the appearance of the battery prismatic can 1000 according to the first embodiment of the disclosure may include a transport unit 10, a large surface inspector 100, a small surface inspector 200, and a bottom surface inspector 300.

The transport unit 10 may include a hand 20. The hand 20 is inserted into the inside of the opening of the prismatic can 1000 and configured to hold the can 1000. In addition, the transport unit 10 is configured to move the can 1000 linearly while holding the can 1000. Meanwhile, despite the literal meaning of the term, the hand 20 may refer to a component that is inserted into the can 1000 and functions to pick up the can 1000.

The transport unit 10 is configured to pick up the can 1000 and transport it to a first inspecting position and a second inspecting position. The can 1000 may undergo inspection for the large surface and the bottom surface at the first inspecting position, and may undergo inspection for the small surface at the second inspecting position.

Meanwhile, the description according to the disclosure has been made based on an example in which the can 1000 is inspected at the first inspecting position and then inspected at the second inspecting position. However, this order may be reversed.

According to the disclosure, the description has been made based on an example in which the transport unit 10 is configured to transport the can 1000 in a horizontal direction. However, the transport unit 10 may also be configured to transport the can 1000 in a vertical direction. The transport unit 10 may include a widespread movement component such as a linear guide, an actuator, or a linear motor, and a widespread configuration such as a suction part or a clamp, and thus detailed descriptions thereof will be omitted.

Each of the large surface inspector 100, the small surface inspector 200 and the bottom surface inspector 300 is configured to perform the inspection for a surface facing a camera module and a portion of the edge e (see FIG. 1) formed on that surface.

The large surface inspector 100 is configured to inspect the large surface of the prismatic can 1000. The large surface inspectors 100 are configured as a pair and arranged to be spaced apart from each other by first spacing. The first spacing may be defined to be larger than the width of the small surface. Therefore, the prismatic can 1000 picked up by the transport unit 10 may be moved linearly in a widthwise direction of the large surface and placed between the pair of large surface inspectors 100.

The large surface inspectors 100 may include the camera modules configured to capture images from opposing directions. The large surface inspectors 100 may inspect a pair of opposing large surfaces simultaneously.

The bottom surface inspector 300 may be provided below the large surface inspector 100. Because the prismatic can 1000 is picked up and transported by the transport unit 10, there is no interference with the bottom surface inspector 300 even though the prismatic can 1000 moves between the large surface inspectors 100.

The bottom surface inspector 300 may be configured to acquire the image of the bottom surface while its own lighting section as well as the lighting section provided in the large surface inspector 100 are in operation. The acquired image may show the bottom surface and four edges around the bottom surface. Because the four edges are configured as a three-dimensional shape, about half of a region acquired by the bottom surface inspector 300 may be utilized for the inspection. That is, the closer a direction in which the camera is facing is to being parallel to a tangent plane of the edge, the more difficult it becomes to detect a defect. In the cross-sectional view, about a 45-degree angular region of the edge formed between two perpendicular surfaces may be used in detecting a defect. The remaining 45-degree angular region is required to be inspected from a different direction to capture an image and detect a defect. According to the disclosure, the small surface inspector 200 and/or the large surface inspector 100 are used to capture the image of the remaining region of the edge, thereby performing defect detection.

Although the description has been made based on the configuration in which the bottom surface inspector 300 operates together with the large surface inspector 100 at the first inspecting position to acquire the image, this configuration is merely an example, and the bottom surface inspector 300 may be modified to be disposed to acquire the image of the bottom surface together with the small surface inspector 200 at the second inspecting position.

The small surface inspector 200 is configured to inspect the small surface of the prismatic can 1000. The small surface inspectors 200 may be configured as a pair like the large surface inspectors 100. The pair of small surface inspectors 200 may be spaced apart from each other by second spacing. The second spacing may be larger than the width of the large surface of the prismatic can 1000. Therefore, the prismatic can 1000 may be horizontally moved in the widthwise direction of the small surface by the transport unit 10 and placed between the small surface inspectors 200.

The small surface inspectors 200 are configured to acquire the images of a pair of opposing small surfaces of the can 1000, thereby performing defect detection.

Meanwhile, when the entry directions for the large surface inspectors 100 and the small surface inspectors 2000 are the same, the transport unit 10 may be configured to rotate the can 1000 by 90 degrees. In this case, the configuration is simplified as linear movement in only one direction is sufficient.

Meanwhile, although not shown, the apparatus 1 for inspecting the appearance of the battery prismatic can 1000 according to the disclosure may include a controller and an image processor. The controller may control the operations of the camera module, the lighting section and the transport unit 10. In addition, the image processor may include an algorithm for detecting a defect based on the acquired image. However, the controller and the image processor may be implemented through a widely known processor, and thus descriptions thereof will be omitted.

Below, the configuration of the large surface inspector will be described in detail.

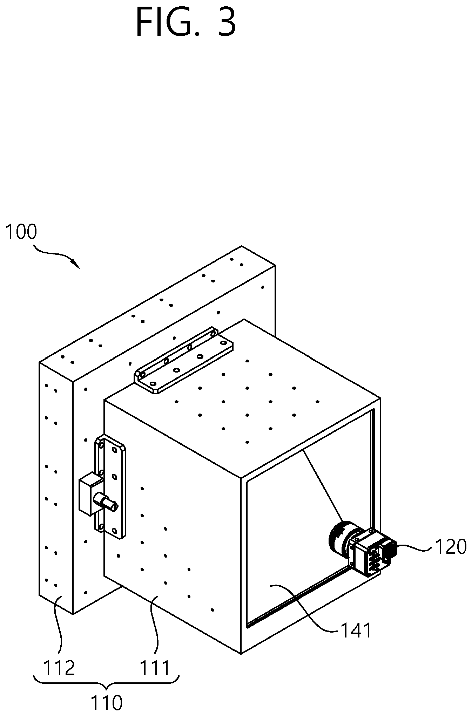

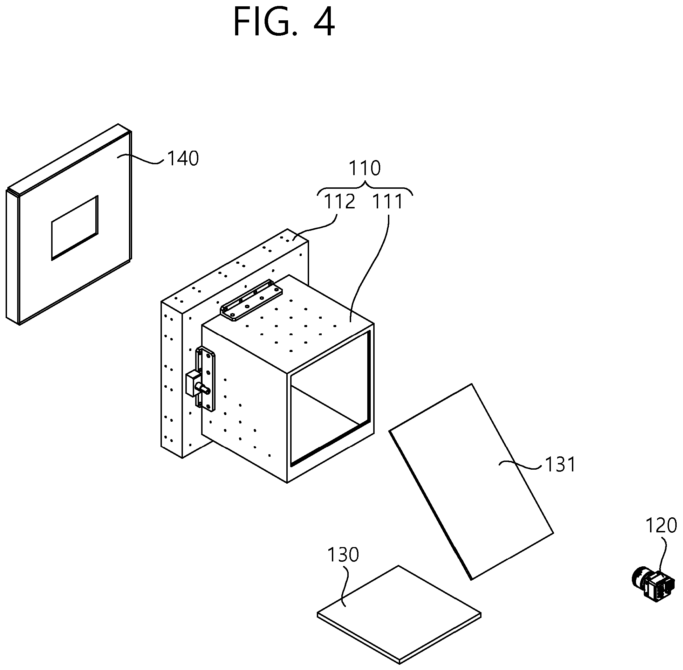

FIG. 3 is a perspective view of a large surface inspector, in the first embodiment of the disclosure. Further, FIG. 4 is an exploded perspective view of the large surface inspector, in the first embodiment of the disclosure.

Referring to FIGS. 3 and 4, the large surface inspector 100 may include a first case 110, a first camera module 120, a first coaxial lighting section 130 and a first ambient lighting section 140.

The first case 110 is configured to block external light interference in order to increase detection accuracy during capturing the images. The first case 110 may have a quadrangular cross-section corresponding to the shape of the prismatic can 1000. The first case 110 may include a coaxial lighting case 111 and an ambient lighting case 112. The coaxial lighting case 111 has a one side on which the camera is provided, and the other side coupling with the ambient lighting case 112. The ambient lighting case 112 may be expanded from the coaxial lighting case 111. The ambient lighting case 112 may be formed so that a portion of the inner surface thereof can extend in a direction parallel to the surface of the can to be imaged. A portion of the ambient lighting case 112, to which the coaxial lighting case 111 is coupled, may be formed with a hole to be irradiated with coaxial light and imaged by the first camera module 120. The other side of the ambient lighting case 112 may be opened to irradiate light around the can.

In the opening, the first coaxial lighting section 130 configured coaxially with the first camera module 120 may be provided. The first coaxial lighting section 130 may be arranged at an angle to the first camera module 120. As an example, a light emitting portion of the first coaxial lighting section 130 may be provided in a direction perpendicular to the first camera module 120. The first coaxial lighting section 130 may include an optical path converter, such as a beam splitter 131, so as to irradiate light coaxially into the first case 110.

On the one side of the first case 110, a plurality of first ambient lighting sections 140 may be provided at positions adjacent to an end portion of the first case 110. The first ambient lighting section 140 may include first ambient lighting units provided on the inner surfaces of the ambient lighting case 112. The first ambient lighting units may be provided on the inner surface of the ambient lighting case 112 at sides facing the can placed at the inspecting position, respectively. That is, the first ambient lighting section 140 may be configured to irradiate light to the can from at least five directions.

Each first ambient lighting unit may include a light-emitting element such as a light-emitting diode. In addition, each first ambient lighting unit may be configured to emit surface-light. Meanwhile, each of the first ambient lighting units may be placed within a predetermined region, and the first ambient lighting units respectively placed within the predetermined regions may be controlled to operate independently of each other.

The first camera module 120 acquires the image of the large surface while the first coaxial lighting section 130 irradiates light coaxially to the large surface and at least one first ambient lighting unit also irradiates light from the surroundings. In this case, the first camera module 120 may be configured to acquire multiple images while the first ambient lighting units are operated in various combinations.

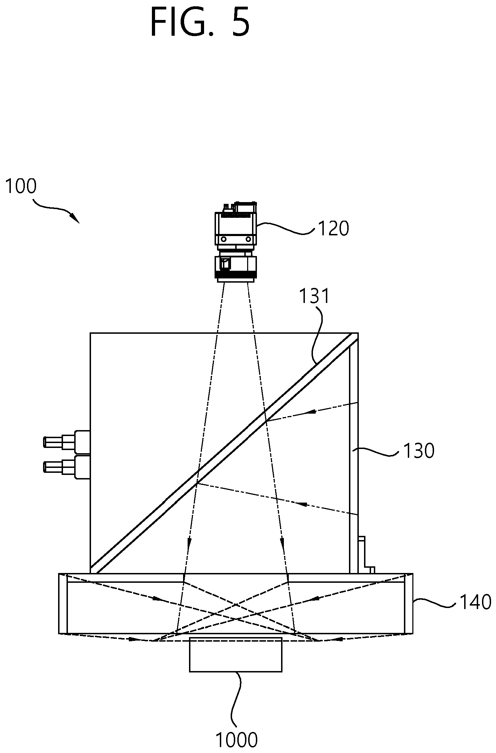

FIG. 5 is an operational state view of the large surface inspector 100, in the first embodiment of the disclosure.

Light from the first coaxial lighting section 130 is irradiated to the large surface at a relatively large angle. Light from the first ambient lighting section 140 is irradiated to the large surface at a relatively small angle. Meanwhile, both the light from the first coaxial lighting section 130 and the light from the first ambient lighting section 140 are irradiated to the edge e (see FIG. 1) at various angles, thereby allowing for more effective detection of defects in an edge portion.

Meanwhile, the foregoing configuration of the large surface inspector 100 may be equally applied to the small surface inspector 200. That is, the small surface inspector 200 may include a second case 210, a second camera module 220, a second coaxial lighting section 230, and a second ambient lighting section 240. However, the small surface inspector 200 may be configured to have a different cross-sectional area corresponding to the small surface of the can 1000. In addition, a configuration such as the first ambient lighting section 140 may be omitted from the bottom surface inspector 300 because the first ambient lighting section 140 provided in the large surface inspector 100 may be used to provide an effect of ambient light to the bottom surface.

Further, the bottom surface inspector 300 may be configured similarly to the large surface inspector 100 except that its size corresponds to the bottom surface and is smaller than that of the large surface inspector 100.

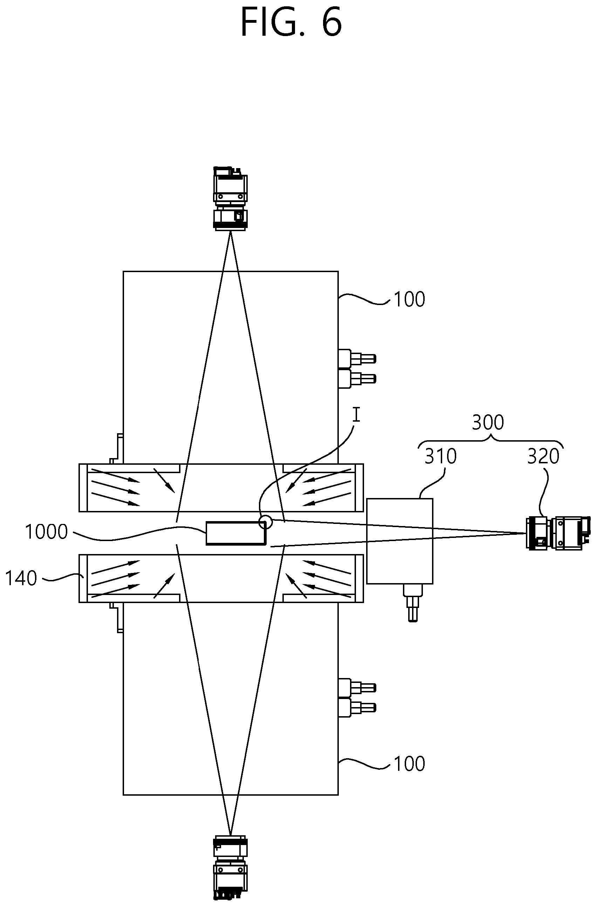

FIG. 6 is a conceptual view showing an optical path at a first inspecting position, in the first embodiment of the disclosure.

Referring to FIG. 6, light may be irradiated from a pair of large surface inspectors 100 and the bottom surface inspector 300 at the first inspecting position. In this case, light may be irradiated to the large surface by the first coaxial lighting section and the first ambient lighting section 140. As an example, the first ambient lighting section 140 may irradiate light at an angle of 0 to 30 degrees to the large surface. In this case, as described above, the light emitting region of the first ambient lighting section 140 may change, and the first camera module may operate to acquire the image of the large surface whenever there is a change in the light emitting region.

The bottom inspector 300 may irradiate the can 1000 with light from the first ambient lighting section 140 provided in the large surface inspector and a third coaxial lighting section provided in a third case 310, thereby acquiring the image through a third camera module 320.

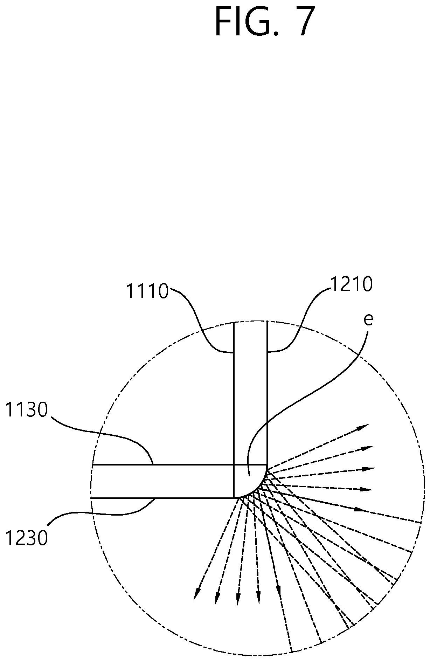

FIG. 7 is an enlarged view of 'I' in FIG. 6.

Referring to FIG. 7, the bottom surface may be irradiated with light from the third coaxial lighting section and may also be irradiated with light from the first ambient lighting section of the large surface inspector. In this case, the light may be reflected from the edges between the large surfaces 1110 and 1210 and the bottom surfaces 1130 and 1230 and received in the third camera module. In this case, the first ambient lighting section may emit surface-light toward the edges e at various angles, and thus the light may be reflected at various angles. Some of the light reflected from the edges e may be collected in the first camera module and/or the third camera module.

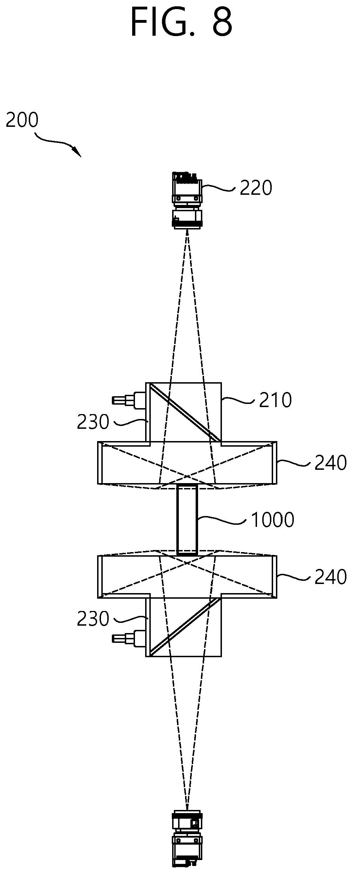

FIG. 8 is a conceptual view showing an optical path at a second inspecting position, in the first embodiment of the disclosure.

Referring to FIG. 8, the images may be acquired by the small surface inspector 200 at the second inspecting position.

In this case, the second coaxial lighting section 230 operates to irradiate light to the small surface and the four edges (or three edges except excluding an opening-side end portion) formed around the small surface. In addition, as an example, the second ambient lighting section 240 may irradiate light at an angle of 0 to 30 degrees to the small surface. The second camera module 220 may acquire the images of the small surface whenever the light emitting region in in the second ambient lighting section 240 is changed.

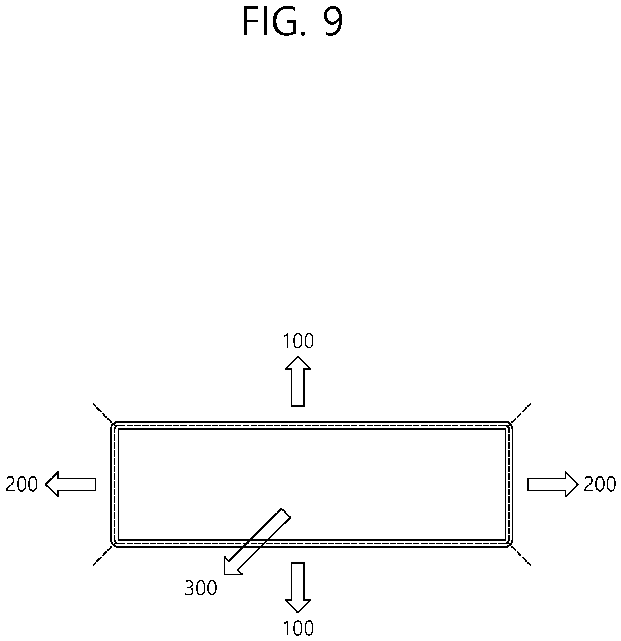

FIG. 9 is a conceptual view showing regions to be inspected by the inspectors based on a bottom view of a prismatic can, in the first embodiment of the disclosure.

Referring to FIG. 9, the images of the large surface and half of an edge region around the large surface (about 45 degrees) may be acquired by the large surface inspector 100. The images of the small surface and half of an edge region around the small surface (about 45 degrees) may be acquired by the small surface inspector 200.

Meanwhile, the images of the bottom surface and half of the four edge regions around the bottom surface (portions of the edges adjacent to the bottom surface) may be acquired by the bottom surface inspector 300.

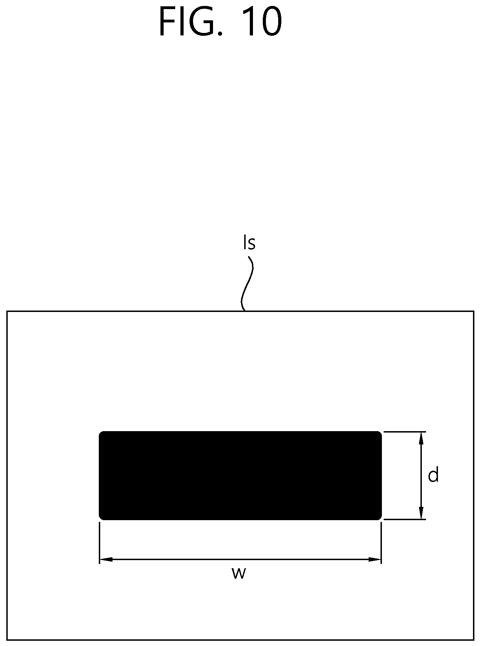

FIG. 10 is a conceptual view showing a silhouette image of the can captured in the first embodiment of the disclosure. Referring to FIG. 10, the apparatus for inspecting the appearance of a prismatic can according to the disclosure is configured to measure the dimensions of the prismatic can. At the first inspecting position, the large surface inspectors are provided on both sides of the can, respectively. In this case, while one large surface inspector irradiates light, the other large surface inspector captures the image. In other words, according to the disclosure, the lighting from the opposite side may be used as backlight to acquire a silhouette image of the can.

In the silhouette image, a region where the light is blocked by the can may be identified, and it is thus possible to calculate the dimensions for the identifiable width and depth of the can. Specifically, a boundary where the edges of the can appear in the silhouette image may be analyzed to extract coordinates in units of pixels, thereby generating data about the shape. Based on the silhouette image Is, it is possible to calculate the dimensions for the large surface as well as the small surface.

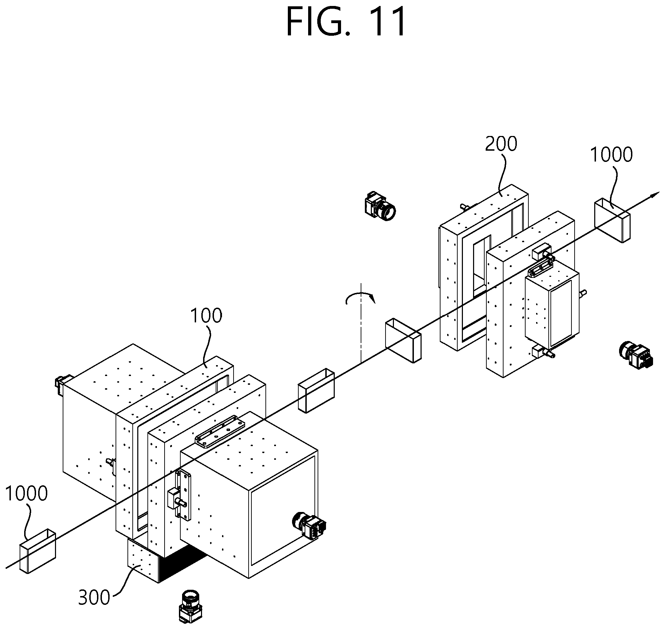

FIG. 11 is a usage state view showing the transport of a prismatic can according to an inspection progress in the first embodiment of the disclosure.

Referring to FIG. 11, the apparatus for inspecting the appearance of a battery prismatic can according to the disclosure may transport the prismatic can in a linear or in-line manner, thereby moving the prismatic can along a straight line with a single angular rotation while passing through the first inspecting position and the second inspecting position.

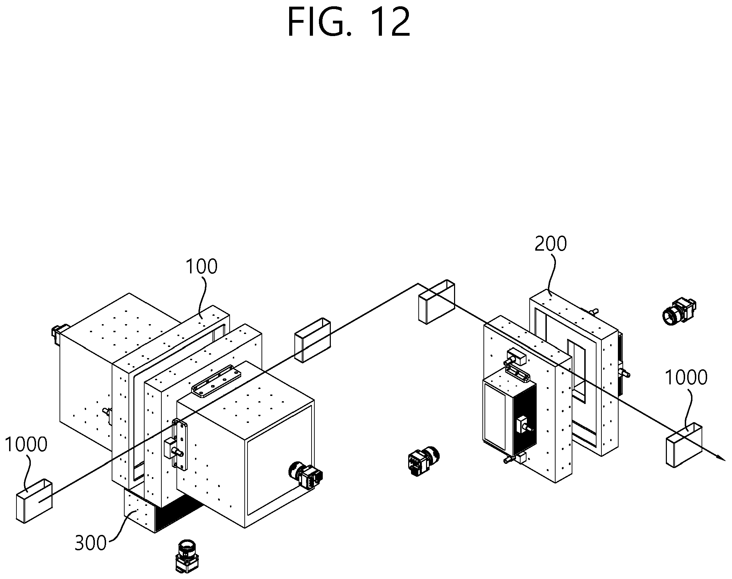

FIG. 12 is a usage state view showing the transport of a prismatic can according to an inspection progress in an alternative embodiment to the first embodiment of the disclosure.

Referring to FIG. 12, it is illustrated that an inspection is performed by changing the transport direction by 90 degrees without changing the posture of the prismatic can at the first inspecting position and the second inspecting position. In the embodiment shown in FIG. 12, the inspection is performed by arranging the small surface inspector 200 to be perpendicular to the entry direction of the large surface inspector 100. When configured as in the embodiment of FIG. 12, the transport unit 10 may be configured to transport the prismatic can in at least two directions.

As described above, the apparatus for inspecting the appearance of a battery prismatic can according to the first embodiment of the disclosure has an effect on minimizing the change in the posture of the prismatic can, thereby rapidly and accurately detecting defects on the outer surfaces and the edge.

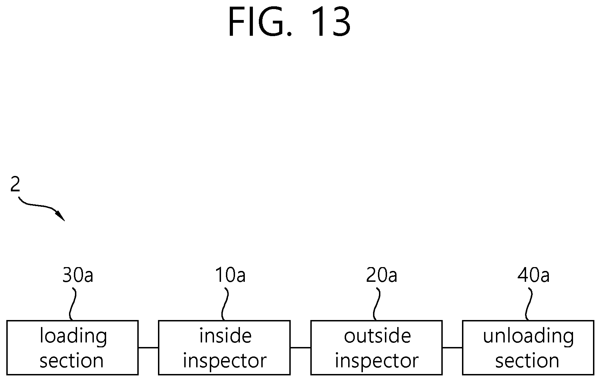

Below, an apparatus for inspecting the appearance of a battery prismatic can according to a second embodiment of the disclosure will be described with reference to FIGS. 13 to 24b based on the above description. The apparatus for inspecting the appearance of a battery prismatic can according to the second embodiment may be configured to acquire accurate images of the inside and outside of the prismatic can.

FIG. 13 is a block diagram of an apparatus 2 for inspecting the appearance of a battery prismatic can according to the second embodiment of the disclosure. Referring to FIG. 13, the apparatus 2 for inspecting the appearance of a battery prismatic can according to the second embodiment of the disclosure may include a loading section 30a, an inside inspector 10a, an outside inspector 20a, and an unloading section 40a.

The apparatus 2 for inspecting the appearance of a battery prismatic can according to the second embodiment of the disclosure is configured to complete an inspection by continuously transporting the prismatic can in an in-line manner to pass through each inspecting position.

The loading section 30a is configured to be loaded with a plurality of prismatic cans transported from the outside.

The inside inspector 10a is configured to perform an inspection for the inside of the prismatic can that has been transported to an inside inspecting position. The inside inspector 10a may irradiate light to the inside of the prismatic can and acquire an image, thereby inspecting whether there is a defect on the inside.

After the inspection of the inside of the prismatic can is completed, the transport unit transports the prismatic can to the first inspecting position.

The outside inspector 20a is configured to perform an appearance inspection for the outside of the prismatic can. The outside inspector 20a is configured to perform the appearance inspection while transporting the prismatic can to the first inspecting position and the second inspecting position.

The unloading section 40a is configured to sort and load the inspection-completed prismatic cans. For example, the unloading section 40a is configured to sort and load non-defective and defective prismatic cans separately.

Meanwhile, according to the second embodiment of the disclosure, the inside or outside of the prismatic can is configured to be selectively supported or held during the transport and inspection of the prismatic can.

However, widely used configurations may be used for the transport unit, the loading section 30a and the unloading section 40a, and thus further detailed descriptions thereof will be avoided.

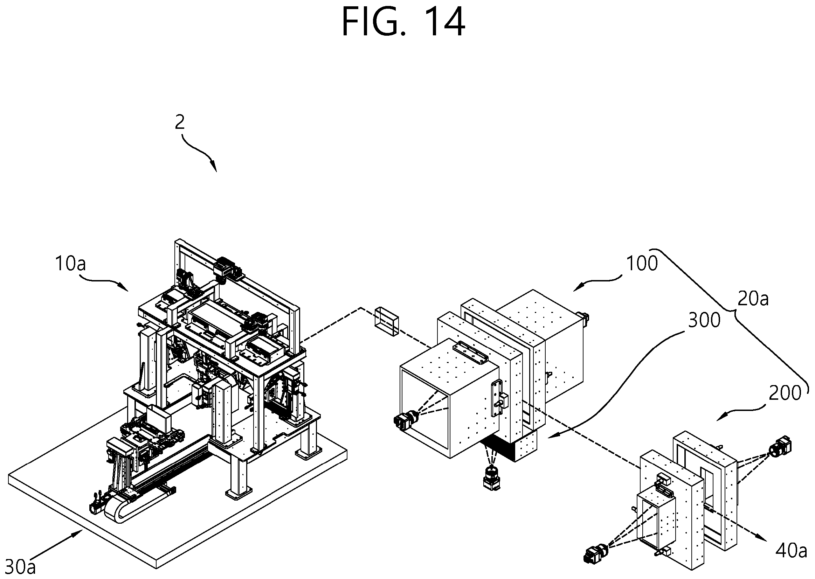

FIG. 14 is a perspective view of the apparatus for inspecting the appearance of a battery prismatic can according to the second embodiment of the disclosure.

Referring to FIG. 14, the apparatus 2 for inspecting the appearance of a battery prismatic can according to the second embodiment of the disclosure performs an inspection for the prismatic can, which has been transported from the loading section 30a, in the inside inspector 10a.

The inside inspector 10a may include a plurality of mirrors to acquire an inside image of the prismatic can. In addition, coaxial lighting may be used to irradiate light to the inside of the can and obtain the image. In this case, the angle and/or position of the mirrors may be adjusted to acquire an accurate image of a side portion close to the bottom surface (inner bottom surface), thereby acquiring the image.

The transport unit is configured to transport the prismatic can by picking up the inside of the prismatic can that has undergone the inside inspection. When the can picked up by the transport unit is moved to the outside inspector 20a, an inspection for the outside of the prismatic can is performed.

The outside inspector 20a may include the large surface inspector 100 and the small surface inspector 200. The large surface inspector 100 is configured to capture images of a pair of outer large surfaces. The small surface inspector 200 is configured to capture images of a pair of small surfaces. In this regard, the descriptions have already been made in the first embodiment, and thus redundant descriptions thereof will be omitted.

Further, as in the first embodiment, according to the second embodiment, the bottom surface inspector 300 may be arranged to capture images of the bottom surface. Likewise, the descriptions in this regard have already been made above, and thus redundant descriptions thereof will be omitted.

Meanwhile, in the case of maintaining the transport direction of the prismatic can, the transport unit may change the orientation the prismatic can by 90 degrees while transporting the prismatic can from the large surface inspector 100 to the small surface inspector 200.

Meanwhile, although not shown, the prismatic cans that have undergone the inspection may be sorted and loaded in the unloading section 40a according to the inspection results.

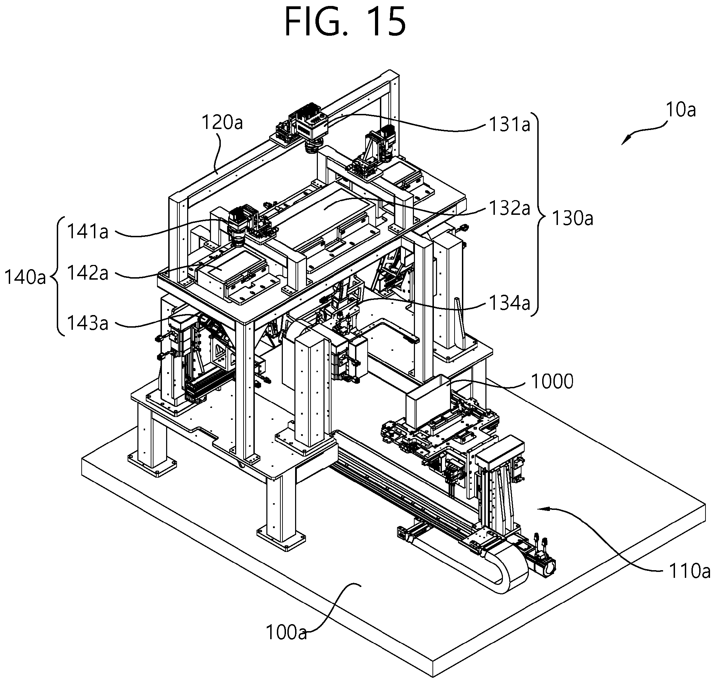

Below, the inside inspector according to the second embodiment of the disclosure will be described with reference to FIGS. 15 to 24b.

Referring back to FIG. 1 for a moment, in the description of the inside inspector, the 'large surface' may refer to the large surface 1110 on the inside, the small surface may refer to the small surface 1120 on the inside, and the bottom surface may refer to the bottom surface 1130 on the inside.

In the second embodiment of the disclosure, the inside inspector 10a is configured to perform a vision inspection for the large surface 1110, the small surface 1120 and the bottom surface 1130 on the inside, thereby accurately detecting defects.

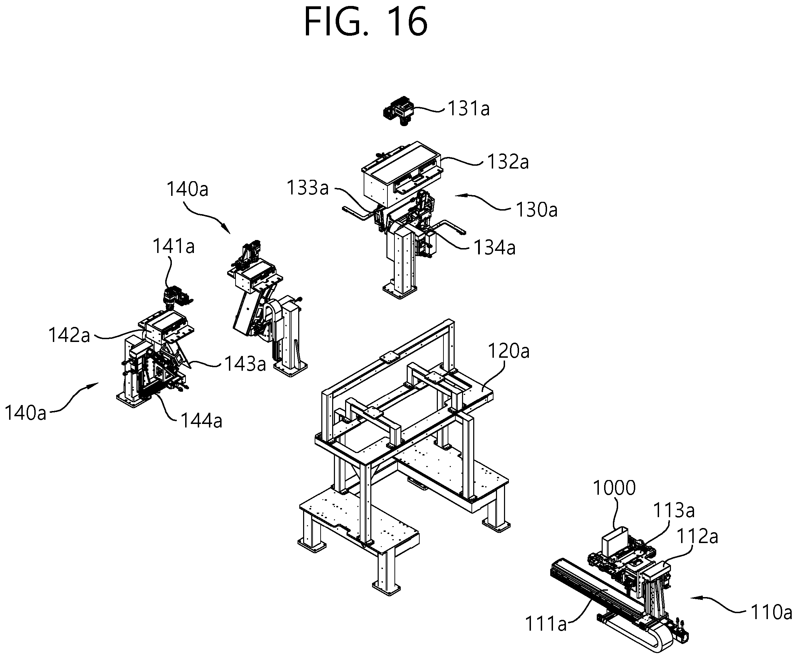

FIG. 15 is a perspective view of an inside inspector in the second embodiment of the disclosure. Further, FIG. 16 is an exploded perspective view of the inside inspector in the second embodiment of the disclosure.

Referring to FIGS. 15 and 16, the inside inspector 10a for the prismatic can 1000 according to an embodiment of the disclosure is configured to distinguish between the large surface 1110 and the small surface 1120 of the prismatic can 1000 and to actively adjust the angle of the mirror, thereby obtaining an accurate image of the inside.

The inside inspector 10a may include a base 100a, a mounting frame 120a, a seating unit 110a, a large surface imaging module 130a, and a small surface imaging module 140a.

The base 100a is formed extending in a horizontal direction, and serves as a foundation on which other components are placed according to the disclosure.

The mounting frame 120a is configured to mount the large surface imaging module 130a and the small surface imaging module 140a thereon. The mounting frame 120a mounts the large surface imaging module 130a and the small surface imaging module 140a to a predetermined height or higher. The mounting frame 120a may be configured to have several layers. Depending on the height, the mounting frame 120a may be provided with a mirror (to be described later) or a camera. However, the frames shown in FIGS. 15 and 16 are merely examples, and may have various shapes in which the camera and/or the mirror may be provided.

The seating unit 110a is configured to seat the prismatic can 1000 thereon. The seating unit 110a is configured so that the prismatic can 1000 can be seated with the opening facing the camera. As an example, the seating unit 110a may allow for seating at least one can for the secondary battery at predetermined intervals. In addition, the seating unit 110a is movable on the base 100a in the horizontal direction by a seating unit adjuster so that the prismatic can 1000 can be placed at the inside inspecting position.

The seating unit adjuster may include a seating unit horizontal actuator 111a, a seating unit vertical actuator 112a, and a clamp 113a. The seating unit horizontal actuator 111a and the seating unit vertical actuator 112a may be configured to adjust the horizontal or vertical positions of the seating unit 110a, and may be configured as a linear moving element, for example, a linear motor.

The clamp 113a is configured to hold the seated prismatic can 1000, and may be selectively operated by the controller. The clamp 113a may selectively hold the prismatic can 1000 on the outside of the prismatic can 1000.

The seating unit adjuster may operate to move the prismatic can 1000 to the inside inspecting position without preventing interference with the mirrors (to be described later). The inside inspecting position may be a space defined by the mounting frame 120a, for example, a lower side of the mounting frame 120a.

The large surface imaging module 130a is configured to capture the images of the pair of large surfaces and the bottom surface among the inner surfaces of the prismatic can 1000. The large surface imaging module 130a may include a first camera (first inside camera module) 131a, a first inside coaxial lighting section 132a, a first mirror 133a, and a first mirror adjuster 134a.

The first camera 131a may directly capture the image of the bottom surface of the can 1000. Additionally, the first camera 131a may be configured to capture the images of the large surfaces 1110 reflected from the mirror.

The first inside coaxial lighting section 132a may be configured to irradiate light to the inside of the can 1000. The first inside coaxial lighting section 132a may be provided vertically above the can 1000. The first inside coaxial lighting section 132a may include a first lighting unit (not shown), and a semi-reflective mirror (not shown) provided at positions offset from the optical axis of the first camera 131a.

The first lighting unit (not shown) may be provided in plural, and the plurality of first light units may configured to emit light at different positions and may also be configured to operate individually.

The first mirrors 133a form a pair, and the pair of first mirrors 133a may be configured to reflect the different large surfaces 1110 toward the first camera 131a.

The first mirror adjusters 134a form a pair, and each first mirror adjuster 134a may be configured to adjust the position and/or angle of the first mirror 133a. By the operation of the first mirror adjuster 134a, the angle at which the first camera 131a views the large surface 1110 of the can 1000 varies depending on the height.

The small surface imaging module 140a may include a pair of second cameras (second inside camera modules) 141a that acquire images respectively as the spacing between the small surfaces 1120 increases.

In this case, it may be taken into account that a single camera captures the images of both the small surface 1120 and the large surface 1110. However, due to problems such as limitations in the reflection angle of the mirror and interference with the first camera 131a of the large surface imaging module 130a, it is preferable to use plurality of cameras. Accordingly, the small surface imaging modules 140a are configured as a pair, and the second camera 141a is disposed vertically above a second mirror 143a so as to increase the angle at which the second camera 141a views the small surface 1120.

Specifically, the small surface imaging module 140a is configured to inspect the pair of small surfaces 1120. The small surface imaging module 140a may include a second camera 141a, a second inside coaxial lighting section 142a, a second mirror 143a, and a second mirror adjuster 144a. The small surface imaging modules 140a are configured as a pair, and are configured to capture the images of different small surfaces 1120, respectively.

Meanwhile, each of the second inside coaxial lighting sections 142a may include a plurality of second lighting units (not shown) similarly to the first inside coaxial lighting section 132a. In addition, the plurality of second lighting units may be configured to operate independently at different positions.

However, the above-described configuration is merely an example, and a configuration according to an alternative embodiment may include a pair of large surface imaging modules 130a and a single small surface imaging module 140a.

As described above, according to the disclosure, each of the large surface imaging module 130a and the small surface imaging module 140a may include a mirror and a mirror adjuster. In this case, the sizes and shapes of the first mirror 133a and the second mirror 143a may be the same or different. In addition, the first mirror adjuster 134a and the second mirror adjuster 144a may have similar configurations, and may each be configured to adjust the angle and vertical and horizontal positions of the mirror.

Below, for convenience of description, the configuration of the first mirror 133a and the first mirror adjuster 134a provided at a high position will be described.

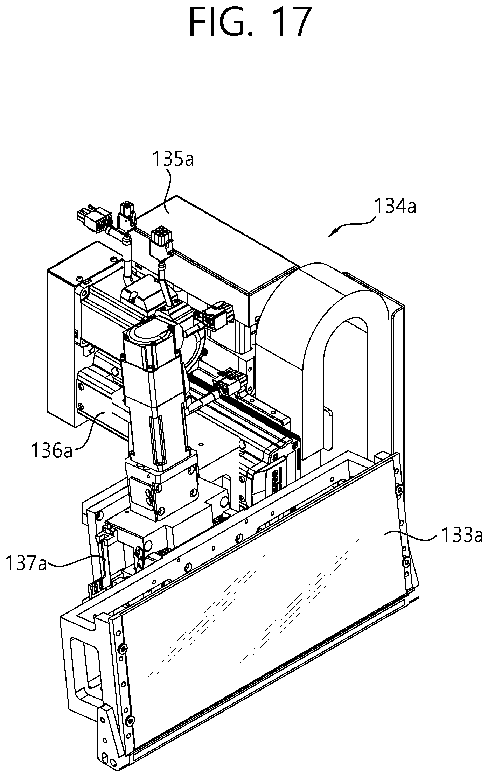

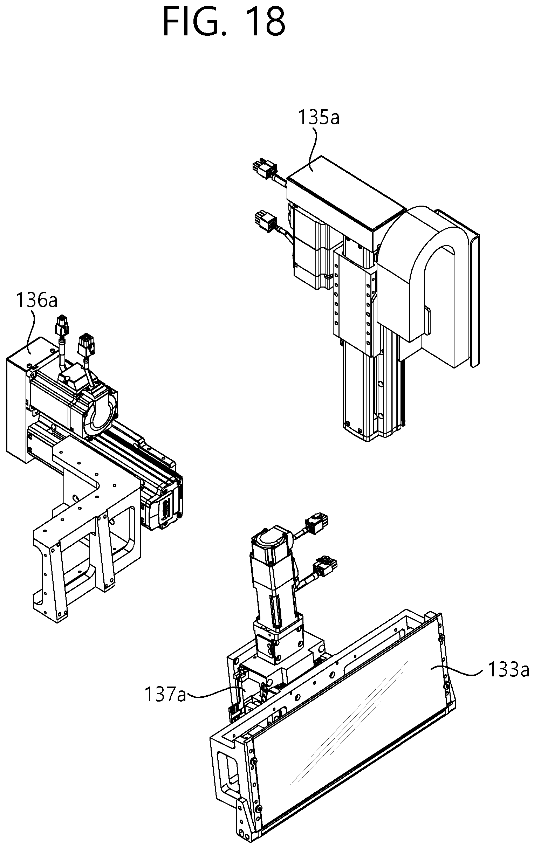

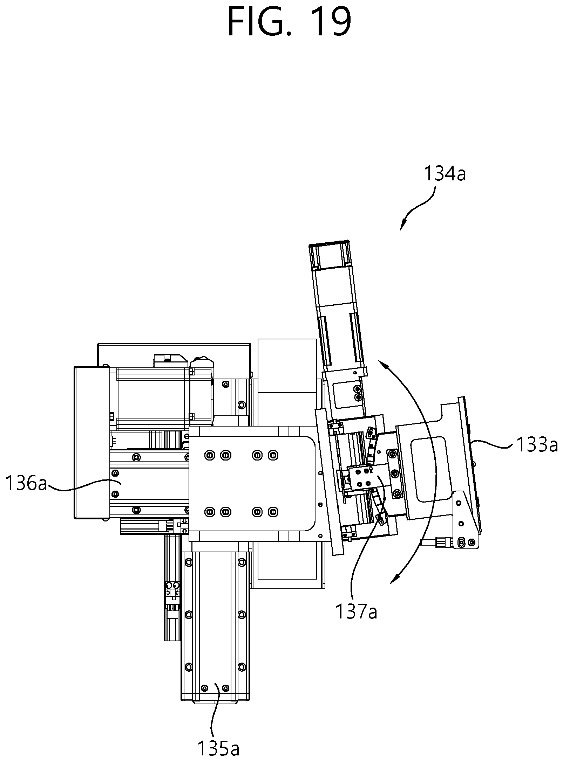

FIG. 17 is a perspective view of a first mirror and a first mirror adjuster in the second embodiment of the disclosure. FIG. 18 is an exploded perspective view of the first mirror adjuster in the second embodiment of the disclosure. FIG. 19 is an operational state view showing an angle adjustment operation of the first mirror adjuster in the second embodiment of the disclosure.

Referring to FIGS. 17 to 18, the first mirror adjuster 134a may include a first horizontal actuator 136a, a first vertical actuator 135a, and a first rotation actuator 137a. The first vertical actuator 135a may have a one side fixed to the mounting frame 120a. The first horizontal actuator 136a may be provided on the other side of the first vertical actuator 135a. The first rotation actuator 137a may be provided at an end portion of the first horizontal actuator 136a. The first rotation actuator 137a may include a link mechanism, and may be applied as a configuration in which linear motion ultimately adjusts the angle of the mirror. However, this is merely an example, and the first rotation actuator 137a may have various configurations capable of adjusting the angle.

Meanwhile, although not shown, the configuration of the second mirror adjuster 144a may also include a second vertical actuator 145a, a second horizontal actuator 146a, and a second rotation actuator 147a, similarly to the configuration of the first mirror adjuster 134a.

Referring to FIG. 19, it is illustrated that the operation of the first mirror adjuster 134a causes change in the center of the mirror and adjustment in the angle of the mirror. The operation of the first mirror adjuster 134a may be linked to the operation of the first camera 131a. The first mirror adjuster 134a may adjust the position and/or angle of the first mirror 133a when the first camera 131a captures the images of upper, middle, and lower regions of the large surface 1110. Meanwhile, the amount of position movement and/or angle adjustment may vary depending on change in the size or shape of the can.

Meanwhile, although not shown, the second mirror adjuster 144a may also operate similarly to the first mirror adjuster 134a.

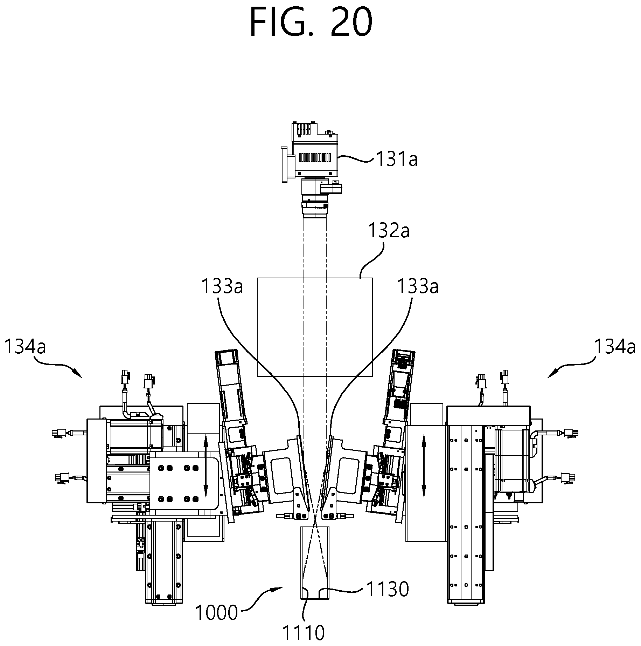

FIG. 20 is a view showing an operation of a large surface imaging module in the second embodiment of the disclosure.

Referring to FIG. 20, while the first inside coaxial lighting section 132a is operating, the first camera 131a may capture the images of the bottom surface 1130 of the can 1000 placed vertically downwards and the pair of large surfaces 1110 reflected on the pair of first mirrors 133a. In this case, the images may be acquired by adjusting the focus to a longer distance when capturing the first mirror 133a, compared to when capturing the bottom surface 1130.

Further, the first mirror adjuster 134a may adjust the angle of the first mirror 133a so that each image of the lower region and the upper region of the large surface 1110 can be captured. In addition, the position of the first mirror 133a can be adjusted. Although not shown, the controller may perform control by analyzing the images acquired from the image processor. The image processor may analyze the images and determine whether adjustment of the angle and posture of the first mirror 133a is necessary. Further, the image processor may determine whether the adjustment of the focal length is necessary. The controller may operate the first mirror adjuster 134a or adjust the focal length of the first camera module 131a based on a value received from the image processor.

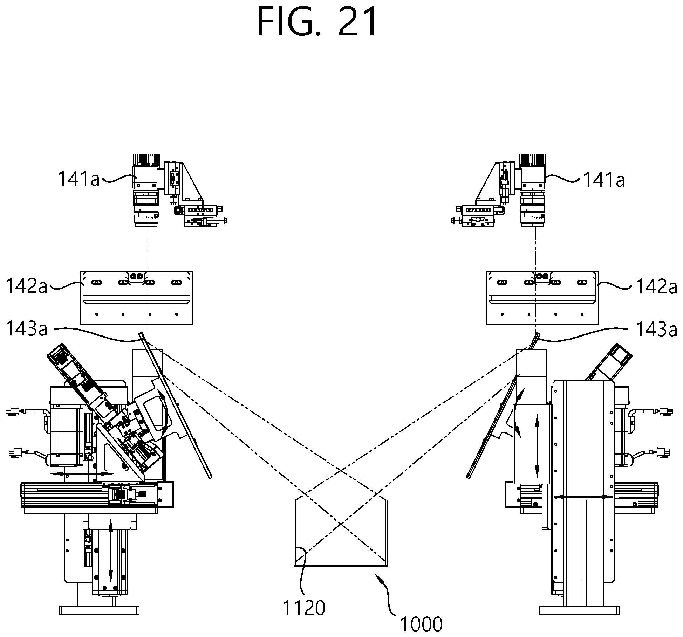

FIG. 21 is a view showing an operation of a small surface imaging module in the second embodiment of the disclosure.

Referring to FIG. 21, each of the small surface imaging modules 140a captures the image of the small surface 1120. In this case, by irradiating light and adjusting the posture of the second mirror 143a while the second inside coaxial lighting section 142a is operating, the small surface imaging modules 140a may be controlled to capture images of an upper region of the small surface 1120 and a lower region of the small surface 1120. Meanwhile, the image processor may adjust the position and posture of the second mirror 143a based on the acquired images. In addition, the focus of the second camera 141a may be adjusted based on the images acquired by the image processor.

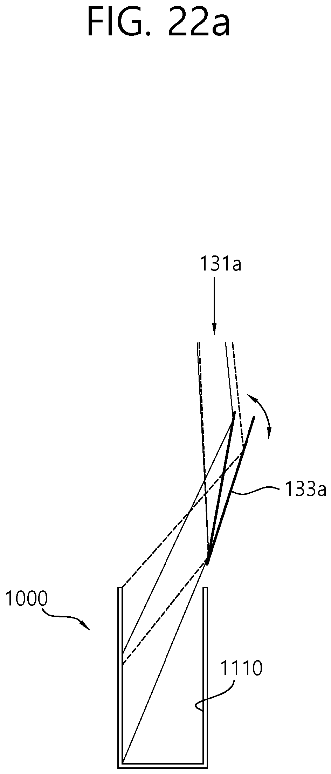

FIG. 22a is a view showing a capturing region based on the operation of the large surface imaging module in the second embodiment of the disclosure.

Referring to FIG. 22a, the large surface imaging module 130a may change an upward tilt angle of the first mirror 133a when capturing the image of the upper region. That is, in this case, the first mirror adjuster 134a may operate to have a gentle inclination. In this case, the maximum angle of the first mirror 133a may vary depending on the shape of the can 1000 and the positions of the first camera 131a and the first mirror 133a.

The first mirror adjuster 134a may adjust the angle of the first mirror 133a so that the inclination of the first mirror 133a can increase when capturing the image of the lower region. In addition, the first mirror adjuster 134a may adjust the vertical and/or horizontal positions of the first mirror 133a when capturing the images of the upper and lower portions of the large surface 1110.

Meanwhile, although not shown, the first mirror adjuster 134a may adjust the angle of the first mirror 133a several times when capturing the image of the large surface 1110. Each time when the angle of the first mirror 133a is adjusted, the focus of the first camera 131a is adjusted, thereby acquiring the image.

As an example, the large surface imaging module 130a may acquire the images of the regions having different heights by adjusting the pair of first mirror adjusters 134a three times. As an example, the first camera 131a may acquire the images of the upper region of the pair of large surfaces 1110, the middle region of the pair of large surfaces 1110, and the lower region of the pair of large surfaces 1110.

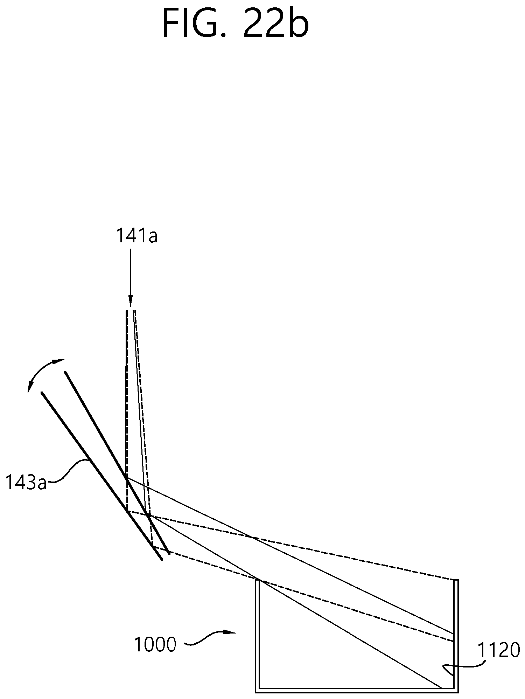

FIG. 22b is a view showing a capturing region based on the operation of the small surface imaging module in the second embodiment of the disclosure.

Referring to FIG. 22b, according to the second embodiment of the disclosure, the pair of small surface imaging modules 140a may acquire the images of the small surface 1120 by symmetrically adjusting the second mirror adjuster 144a. The pair of second cameras 141a are configured to capture the images of the opposing small surfaces 1120, respectively. In this case, when capturing the images of the upper and lower regions of the small surface 1120, the angle and position of the second mirror 143a may be adjusted.

Meanwhile, the second camera 141a may acquire a plurality of images while the angle and/or position of the second mirror 143a are fixed. In this case, each image may be acquired each time when a light-emitting combination of the second lighting unit is changed. By combining the multiple images captured at a single angle of the mirror, detection accuracy based on image analysis may be improved.

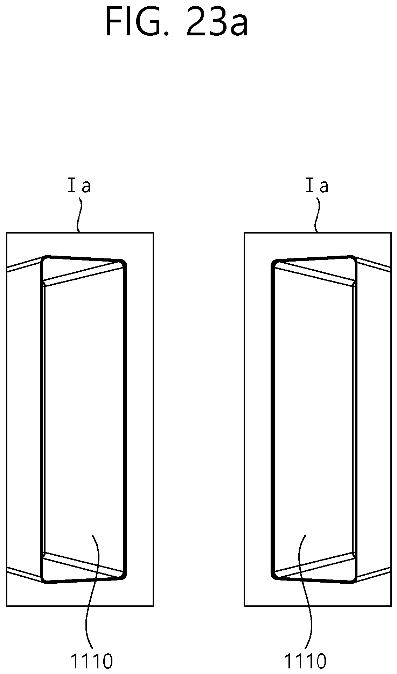

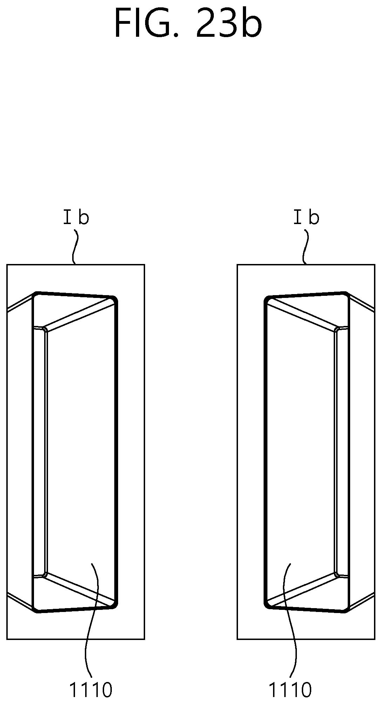

FIGS. 23a and 23b are images captured based on the operation of the large surface imaging module in the second embodiment of the disclosure.

Referring to FIG. 23a, according to the second embodiment of the disclosure, the large surface imaging module 130a may adjust the positions and/or angles of the pair of first mirrors 133a so as to capture the images of the upper region of the large surface 1110. Therefore, images Ia of the large surface 1110 are acquired by the first camera 131a as if they are captured at a large angle (close to perpendicular to the large surface 1110).

Referring to FIG. 23b, according to an embodiment of the disclosure, the large surface imaging module 130a may increase the angles of the pair of first mirrors 133a in order to capture the lower region of the large surface 1110. In addition, the positions of the first mirrors 133a may be adjusted. Therefore, the first camera 131a is allowed to capture images Ib of the side surfaces, in which an inner deep portion of the can is shown.

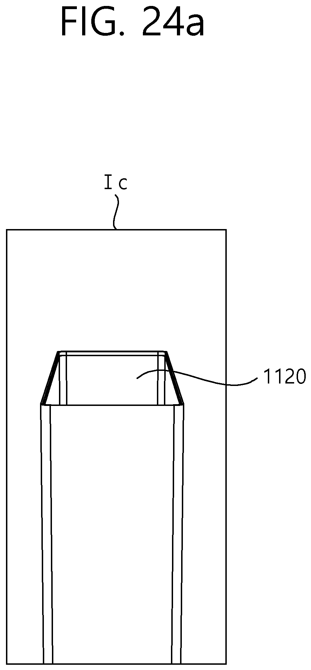

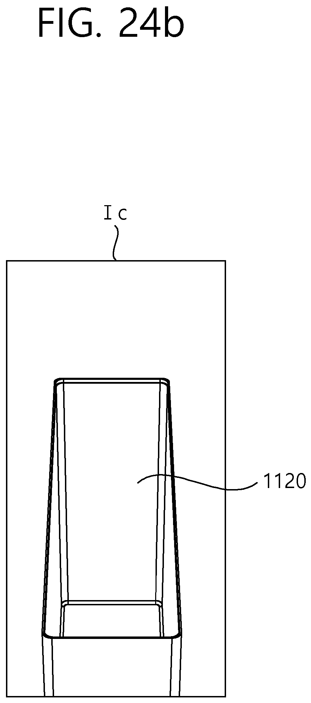

FIGS. 24a and 24b are images captured based on the operation of the small surface imaging module in the second embodiment of the disclosure.

Referring to FIG. 24a, the small surface imaging module 140a according to the disclosure may acquire an image Ic of the small surface 1120 as if the upper region of the small surface 1120 is viewed and captured by the camera at a high angle.

Referring to FIG. 24b, by adjusting the second mirror adjuster 144a, an image Id of the small surface 1120 may be acquired by the second camera 141a as if the small surface 1120 is viewed at a low angle, and the image of the lower region on the inside is acquired. In other words, the small surface imaging module 140a acquires the image viewed at different angles according to the heights of the small surface 1120.

The acquisition of the images described above with reference to FIGS. 24a and 24b may be performed simultaneously for the pair of small surfaces 1120 by the pair of second cameras 141a, the pair of second mirrors 143a and the pair of second mirror adjuster 144a.

As above, the inside inspector 10a according to the second embodiment of the disclosure may acquire the images as if they are obtained by capturing the inside at various angles while the prismatic can 1000 is stopped at the inspecting position.

Meanwhile, similarly to the first embodiment, the 'large surface' to be inspected by the outside inspector of the second embodiment may refer to the large surface 1210 on the outside, the small surface may refer to the small surface 1220 on the outside, and the bottom surface may refer to the bottom surface 1230 on the outside.

In this case, referring back to FIG. 14, the outside inspector 20a in the apparatus 2 for inspecting the appearance of the battery prismatic can according to the second embodiment may include the large surface inspector 100, the small surface inspector 200 and the bottom surface inspector 300 according to the first embodiment. Further, referring back to FIG. 2 for a moment, the outside inspector 20a according to the second embodiment may include the transport unit 10 according to the first embodiment to pick up and transport the prismatic can 1000.

In other words, the outside inspector 20a of the apparatus 2 for inspecting the appearance of the battery prismatic can according to the second embodiment may be provided with the components according to the first embodiment, or may be implemented by the apparatuses that operate substantially identically or similarly thereto. Therefore, the description of the outside inspector 20a according to the second embodiment will be omitted to avoid redundant description.

The apparatus for inspecting the appearance of a battery prismatic can according to the disclosure has an improved accuracy in detecting a defect on the edges as well as on multiple outer surfaces.

Further, the apparatus for inspecting the appearance of a battery prismatic can according to the disclosure is capable of acquiring accurate images of the inside and outside of the can, and thus improves an inspection accuracy based on the acquired accurate images. In addition, the inspection of the appearance is performed while minimizing the posture change and movement of the prismatic can, thereby ensuring the inspection efficiency.

### [Reference Numerals]

1000: prismatic can
1110, 1210: large surface
1120, 1220: small surface
1130, 1230: bottom surface e: edge
1, 2: apparatus for inspecting appearance of battery prismatic can
100: large surface inspector
110: first case
120: first camera module
130: first coaxial lighting section
131: beam splitter
140: first ambient lighting section
200: small surface inspector
210: second case
220: second camera module
230: second coaxial lighting section
240: second ambient lighting section
241: second ambient lighting unit
300: bottom surface inspector
310: third case
320: third camera module
330: third coaxial lighting section
10: transport unit 20: hand

## Claims

1. An apparatus for inspecting a prismatic can having a long side and a short side, the apparatus comprising:
a pair of large surface inspectors spaced apart by first spacing so that the prismatic can can enter a first inspecting position with its small surface having the short side first, and configured to capture images from facing directions; and
a pair of small surface inspectors spaced apart by second spacing so that the prismatic can can enter a second inspecting position with its large surface having the long side first, and configured to capture images from facing directions.

2. The apparatus of claim 1, wherein each large surface inspector comprises:
a first camera module configured to capture the image of the large surface;
a first coaxial lighting section configured to irradiate light coaxially with the first camera module; and
a first ambient lighting section configured to irradiate light at an angle of less than 45 degrees to the large surface.

3. The apparatus of claim 2, wherein the first ambient lighting section comprises at least one first ambient lighting unit that emits surface light along a surface perpendicular to the large surface.

4. The apparatus of claim 3, wherein the first ambient lighting section comprises at least the four first ambient lighting units provided in four directions along edges of the large surface.

5. The apparatus of claim 4, wherein the first ambient lighting unit is provided outside a region to which light is irradiated by the first coaxial lighting section.

6. The apparatus of claim 5, further comprising a case that is configured to comprise:
one side on which a cross-sectional area is configured as a first area, and a hole is formed at a center portion to allow for image capturing of the camera module, and
other side on which a cross-sectional area is configured as a second area larger than the first area, and the ambient lighting unit is provided on an inner side of side walls.

7. The apparatus of claim 6, further comprising a bottom surface inspector provided below the large surface inspector, and configured to acquire an image of a bottom surface of the prismatic can.

8. The apparatus of claim 7, wherein each of the small surface inspector comprises:
a second camera module configured to capture an image of the small surface;
a second coaxial lighting section configured to irradiate light coaxially with the second camera module; and
a second ambient lighting section configured to irradiate light at an angle of less than 45 degrees to the small surface.

9. The apparatus of claim 8, further comprising a transport unit that
has one side inserted into the prismatic can and configured to pick up the prismatic can, and
is configured to horizontally move the prismatic can while picking up the prismatic can.

10. The apparatus of claim 1, further comprising:
a seating unit configured to transport the prismatic can to an inside inspecting position; and
an inside inspector configured to inspect the inside of the prismatic can placed at the inside inspecting position,
wherein the inside inspector comprises:
a large surface imaging module configured to capture an image of an inner large surface of the prismatic can seated on the inside inspecting position; and
a small surface imaging module configured to capture an image of an inner small surface of the prismatic can seated on the inside inspecting position, and
wherein each of the large surface imaging module and the small surface imaging module comprises a mirror adjustable in angle and position.

11. The apparatus of claim 10, wherein
the large surface imaging module comprises a first camera, a first inside coaxial lighting section, a first mirror, and a first mirror adjuster,
the small surface imaging module comprises a second camera, a second inside coaxial lighting section, a second mirror, and a second mirror adjuster,
the first mirror adjuster is configured to adjust at least one of the position and angle of the first mirror, and
the second mirror adjuster is configured to adjust at least one of the position and angle of the second mirror.

12. The apparatus of claim 11, wherein the first mirrors and the first mirror adjusters are each provided as a pair to capture images of a pair of the large surfaces.

13. The apparatus of claim 12, wherein the small surface imaging module is configured to acquire images viewed at different angles according to heights of the small surface by adjusting at least one of the angle and position of the mirror.

14. The apparatus of claim 13, wherein the small surface imaging modules is provided as a pair.

15. The apparatus of claim 14, wherein the first mirrors provided as a pair are each provided outside a pair of the inner large surfaces, and each provided to be inclined at a predetermined angle toward an upper side.
